# EUROPEAN PATENT APPLICATION

(11) **EP 1 570 892 A1**
(43) Date of publication of application: **07.09.2005**
(21) Application number: 03778779.3
(22) Date of filing: 10.12.2003
(51) Int. Cl.: B01D 39/20, B01D 46/00, F01N 3/02

(54) **CERAMIC HONEYCOMB FILTER**

(30) Priority: 10.12.2002 JP 2002358470
(71) Applicant: NGK INSULATORS, LTD., Aichi 467-8530 (JP)
(72) Inventor: Hijikata, Toshihiko, c/o NGK Insulators, Ltd., Nagoya-shi, Aichi 467-8530 (JP)
(74) Representative: Paget, Hugh Charles Edward
(86) International application number: PCT/JP2003/015795
(87) International publication number: WO 2004/052501

(57) **Abstract**

The present invention provides a ceramic honeycomb filter, wherein a value obtained by dividing the cube of a porosity (%) in the partition walls having the catalyst(the porosity is a proportion of the volume of the total pores contained in the partition walls, to the total volume of the partition walls including the total pores) by a mean diameter (µm) of all pores, is 0.8x10⁴ or less, and a porosity (%) of pores of 100 µm or above in diameter in the partition walls(the porosity is a proportion of the volume of the pores of 100 µm or above in diameter, to the total volume of the partition walls including the total pores) is 5% or less. With this ceramic honeycomb filter, particulate matter such as soot, deposited on the partition walls can be treated at low temperatures.

## Description

### Technical Field

The present invention relates to a ceramic honeycomb filter. More particularly, the present invention relates to a ceramic honeycomb filter wherein particulate matter such as soot, deposited on the partition walls can be treated by the catalyst loaded on the partition walls, at low temperatures.

### Background Art

For use, for example, as a filter for collecting the fine particles present in an exhaust gas, particularly particulate matter (e.g. soot) contained in an exhaust gas emitted from a diesel engine or the like (hereinafter, the filter is called DPF in some cases), there has been employed a ceramic honeycomb filter which has a plurality of cells functioning as a fluid passage and surrounded by ceramic-made, porous partition walls, wherein the predetermined cells are plugged at one opening end of the each cell and the remaining cells are plugged at the other opening end of the each cell, and wherein the partition walls have a catalyst loaded thereon (see, for example, JP-B-1994-96095).

In using such a ceramic honeycomb filter, particulate matter (e.g. soot) collected by the filter is burnt with the action of the catalyst loaded on the filter, for regeneration of the filter.

However, in treating particulate matter deposited on the ceramic honeycomb filter, with the action of the catalyst, there has been a problem in that the combustion temperature of particulate substance becomes undesirably high owing to the large deposition amount of particulate substance, the variation of regeneration condition, etc., which has invited the breakage and melting of ceramic honeycomb filter.

In recent years, as the main stream of ceramic honeycomb filter, there has been being used a DPF of continuous regeneration type which is a DPF having a catalyst loaded thereon and allowing for continuous regeneration of filter by the combustion of the collected particulate substance (e.g. soot) with the catalyst. In using this continuous regeneration type DPF, an exhaust gas is fed into the DPF, in almost all the operating conditions of diesel engine, with the exhaust gas temperature being controlled at a level at least equal to the temperature at which the catalyst loaded on the DPF can perform an oxidation treatment for collected particulate substance.

In a diesel engine having such a continuous regeneration type DPF mounted thereon, a reduction in exhaust gas temperature is required from the standpoint of better fuel consumption. However, as described above, it is necessary to feed into the DPF, an exhaust gas with the exhaust gas temperature being controlled at a level at least equal to the temperature at which the catalyst loaded on the DPF can perform an oxidation treatment for collected particulate substance; therefore, there has been a problem in that the increase of fuel consumption is inevitable.

The present invention has been made in view of the above problems and provides a ceramic honeycomb filter which can treat particulate matter (e.g. soot) collected on the partition walls, with the action of the catalyst loaded thereon, at low temperatures.

### Disclosure of the Invention

In order to address the above-mentioned problems, the present inventor made a study using a burner which can evaluate the honeycomb filter at fixed temperature of exhaust gas, fixed amount of soot generated, fixed flow amount of exhaust gas, etc. As a result, it was found that the porosity and mean pore diameter, particularly porosity in the partition walls constituting a ceramic honeycomb filter has a large influence on the above-mentioned catalyst ability for oxidation treatment and that the temperature at which particulate matter (e.g. soot) deposited on the partition walls can be treated by the catalyst loaded on the partition walls, can be reduced by setting the porosity and mean pore diameter of the partition walls in respective particular ranges. The finding has led to the completion of the present invention.

According to the present invention, there is provided a ceramic honeycomb filter comprising a plurality of cells functioning as a fluid passage and surrounded by ceramic porous partition walls, the predetermined cells being plugged at one opening end of the each cell, the remaining cells being plugged at the other opening end of the each cell, the partition walls having a catalyst loaded thereon,
wherein a value obtained by dividing the cube of a porosity (%) in the partition walls having the catalyst(the porosity is a proportion of a volume of total pores contained in the partition walls, to a total volume of the partition walls including the total pores) by a mean diameter (µm) of all pores, is 0.8x10⁴ or less, and a porosity (%) of pores of 100 µm or above in diameter in the partition walls(the porosity is a proportion of a volume of the pores of 100 µm or above in diameter, to the total volume of the partition walls including the total pores) is 5% or less.

In the ceramic honeycomb filter of the present invention, it is preferred that the porosity (%) of pores of 100 µm or above in diameter in the partition walls is 4% or less.

It is also preferred that the value obtained by dividing the cube of the porosity (%) in the partition walls having the catalyst by the mean diameter (µm) of all pores is 0.65x10⁴ or less and the porosity (%) of pores of 100 µm or above in diameter in the partition walls is 4% or less.

In the ceramic honeycomb filter of the present invention, it is also preferred that a partition wall thickness is 15 mil or less and a cell density is 200 cells/in.² or more. Incidentally, the partition wall thickness is called also as rib thickness and 1 mil is one thousandth inch (about 0.025 mm).

It is also preferred that the partition walls are composed mainly of at least one compound selected from the group consisting of cordierite, silicon carbide, silicon nitride, alumina, mullite, aluminum titanate, titania and zirconia.

### Brief Description of the Drawings

Fig. 1 is a perspective view schematically showing an embodiment of the ceramic honeycomb filter of the present invention.
Fig. 2 is a graph showing the relations between the value obtained by dividing the cube of the porosity (%) in the partition walls of ceramic honeycomb filter having the catalyst by the mean diameter (µm) of total pores and the temperature (°C) of oxidation treatment, obtained in the Examples of the present invention.

### Best Mode for Carrying Out the Invention

The embodiment of the ceramic honeycomb filter of the present invention is specifically described below referring to the attached drawings. However, the present invention should not be construed to be restricted thereby, and various changes, modifications and improvements may be made thereto based on the knowledge possessed by those skilled in the art, as long as there is no deviation from the scope of the present invention.

In ceramic honeycomb filters such as continuous regeneration type DPF and the like, the evaluation of their ability for oxidation treatment had been made using an actual engine. However, no accurate evaluation had been made in such a method using an actual engine because it is impossible to fix the parameters associated with the filter ability for oxidation treatment, such as the temperature of exhaust gas, the amount of soot generated, the flow amount of exhaust gas, etc. Hence, in development of the ceramic honeycomb filter of the present invention, the present inventor made evaluation of the filter ability for oxidation treatment using a burner which allows for such evaluation with the above-mentioned parameters being fixed.

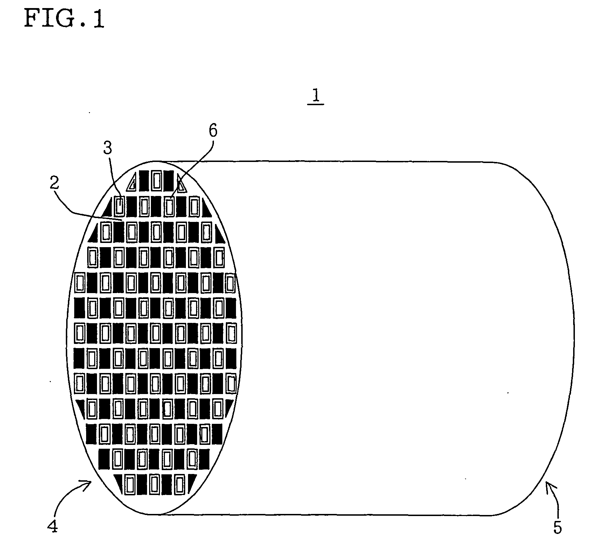

As a result, it was found that the oxidation treatment ability of the catalyst loaded on a ceramic honeycomb filter is largely influenced by the porosity and mean pore diameter, particularly porosity in the partition walls constituting the ceramic honeycomb filter. Fig. 1 is a perspective view schematically showing an embodiment of the ceramic honeycomb filter of the present invention.

The ceramic honeycomb filter 1 according to the present embodiment has a plurality of cells 3 functioning as a fluid passage and surrounded by ceramic-made porous partition walls 2, wherein the predetermined cells 3 are plugged at one opening end 4 of the each predetermined cell and the remaining cells 3 are plugged at the other opening end 5 of the each remaining cell and wherein the partition walls 2 have a catalyst 6 loaded thereon; and the filter 1 is characterized in that the value obtained by dividing the cube of a porosity (%) in the partition walls 2 having the catalyst 6 (the porosity is a proportion of the volume of the total pores contained in the partition walls 2, to the total volume of the partition walls 2 including the total pores) by the mean diameter (µm) of all pores, is 0.8x10⁴ or less and that the porosity (%) of pores of 100 µm or above in diameter in the partition walls 2 (the porosity is a proportion of the volume of the pores of 100 µm or above in diameter, to the total volume of the partition walls 2 including the total pores) is 5% or less.

In the present ceramic honeycomb filter constituted as above, the durability is improved, the catalyst 6 loaded on the partition walls 2 is used efficiently, and particulate matter (e.g. soot) deposited on the partition walls 2 can be treated at low temperatures.

In the ceramic honeycomb filter 1 of the present embodiment, when an exhaust gas containing particulate matter such as soot is passed through from its one end face, the exhaust gas enters the inside of the ceramic honeycomb filter 1 from the opening ends (not plugged) 4 of cells 3 at one end face of the filter 1, passes through porous partition walls 2 having a filtration ability (during this passage, particulate matter contained in the exhaust gas is collected and the exhaust gas is purified), and is discharged from the opening ends (not plugged) 5 of cells 3 at the other end face of the filter 1. By providing the ceramic honeycomb filter 1 with a heating means such as heat of exhaust gas, heater or the like, the filter 1 is totally heated and particulate matter (e.g. soot) collected by the partition walls 2 is oxidized into carbon dioxide and discharged outside. Further, in the ceramic honeycomb filter 1 of the present embodiment which has the catalyst 6 loaded on the partition walls 2, the energy required for activation of particulate substance (e.g. soot) is smaller and the temperature for oxidation treatment is lower.

In the present embodiment, when the value obtained by dividing the cube of the porosity (%) in the partition walls 2 having the catalyst 6 by the mean diameter (µm) of total pores is more than 0.8x10⁴ and/or the porosity (%) of pores of 100 µm or above in diameter in the partition walls 2 is more than 5%, the temperature of oxidation treatment with the catalyst 6 is higher and the heat amount required for heat treatment of soot, etc. collected by the ceramic honeycomb filter 1 is larger. Resultantly, energy saving of diesel engine, etc. is hampered and, when the ceramic honeycomb filter 1 is provided with a heating means such as heater or the like, energy such as electric energy or the like is consumed in excess.

The above-mentioned porosity (%) can be calculated by measuring the volume of the pores in the partition walls 2 using, for example, mercury porosimetry.

In the present embodiment, it is preferred that the porosity (%) of pores of 100 µm or above in diameter in the partition walls 2 is 4% or less, and it is further preferred that the value obtained by dividing the cube of the porosity (%) in the partition walls 2 having the catalyst 6 by the mean diameter (µm) of all pores, is 0.65x10⁴ or less and the porosity (%) of pores of 100 µm or above in diameter in the partition walls 2 is 4% or less. By employing such a constitution, the above-mentioned effects and functions can be further enhanced.

In the present embodiment, it is also preferred that the partition walls 2 have a thickness of 15 mil (about 0.38 mm) or less and the cells have a density of 200 cells/in.² (about 31 cells/cm²) or more. When the thickness of the partition walls 2 is more than 15 mil or the cell density is less than 200 cells/in.², the reduction in temperature for oxidation treatment is small even when the value obtained by dividing the cube of the porosity (%) in the partition walls 2 having the catalyst 6 (the porosity is a proportion of the volume of the total pores contained in the partition walls 2, to the total volume of the partition walls 2 including the total pores) by the mean diameter (µm) of all pores, is 0.8x10⁴ or less and the porosity (%) of pores of 100 µm or above in diameter in the partition walls 2 (the porosity is a proportion of the volume of the pores of 100 µm or above in diameter, to the total volume of the partition walls 2 including the total pores) is 5% or less. The reason is presumed to be as follows. As the partition walls 2 are thicker, they have a larger heat capacity, making smaller the temperature increase of partition wall 2, caused by the combustion heat of particulate matter deposited on the partition walls 2; further, as the cell density is smaller, the surface area of partition wall is smaller and the speed of exhaust gas when the gas passes through the partition walls 2, is larger, making smaller the temperature increase of partition wall 2, caused by the combustion heat of particulate matter deposited on the partition walls 2.

In the present embodiment, it is also preferred from the standpoints of the strength, heat resistance, etc. of the ceramic honeycomb filter 1 that the main component of the partition walls 2 is at least one compound selected from the group consisting of cordierite, silicon carbide, silicon nitride, alumina, mullite, aluminum titanate, titania and zirconia. In the present invention, the main component means a component(s) occupying 80% by mass or more of all the components and forming a main crystalline phase.

In the present embodiment, the plugging member used for plugging one end of each cell 3 is preferred to contain, as the main component, at least one compound selected from those each mentioned previously as a preferable main component of the partition walls 2 and is further preferred to contain, as the main crystalline phase, a crystalline phase of the same kind as the main crystalline phase of the partition walls 2.

In the ceramic honeycomb filter 1 of the present embodiment, there is no particular restriction as to the sectional shape of each cell 3. However, the sectional shape is preferred to be any of a triangle, a tetragon, a hexagon and a corrugation from the standpoint of cell production. There is no particular restriction, either, as to the sectional shape of the ceramic honeycomb filter 1; and the sectional shape may be, for example, a circle as shown in Fig. 1, an oval, a race track shape, an oblong shape, a polygon (e.g. triangle, substantially triangle, tetragon or substantially tetragon), and an irregular shape.

As to the catalyst 6 used in the present embodiment, there is no particular restriction as long as it is an oxidation catalyst, and there can be mentioned, as preferred examples, platinum, palladium and rhodium.

The ceramic honeycomb filter 1 of the present embodiment can be produced by, for example, the following process.

First, there is produced a honeycomb structure having a plurality of cells functioning as a fluid passage and surrounded by ceramic-made porous partition walls. To a raw material powder for honeycomb structure, for example, a silicon carbide powder (100 parts by mass) are added a binder, for example, methyl cellulose and hydroxypropoxymethyl cellulose (0.5 to 5 parts by mass), a surfactant and water (10 to 40 parts by mass) and a pore forming agent, for example, graphite (5 to 40 parts by mass). Mixing and kneading is conducted to produce clay having plasticity. This clay is vacuum-deaerated and then extruded using a die having a predetermined shape, into a honeycomb structure having a plurality of cells functioning as a fluid passage. The particle diameters and particle diameter distributions of the raw material powder and the pore forming agent are controlled so as to give a final ceramic honeycomb filter 1 such as shown in Fig. 1, in which the value obtained by dividing the cube of the porosity (%) in the partition walls 2 having catalyst 6 (the porosity is a proportion of the volume of the total pores contained in the partition walls 2, to the total volume of the partition walls 2 including the total pores) by the mean diameter (µm) of all pores, is 0.8x10⁴ or less and that the porosity (%) of pores of 100 µm or above in diameter in the partition walls 2 (the porosity is a proportion of the volume of the pores of 100 µm or above in diameter, to the total volume of the partition walls 2 including the total pores) is 5% or less. When, in this stage, the control to achieve the above ranges is difficult, the honeycomb structure before loading of catalyst 6 may have, for example, a value [obtained by dividing the cube of the porosity (%) in the partition walls by the mean diameter (µ m) of total pores] of 1.0x10⁴ or less and a porosity (%) of the partition walls (when only the pores of 100 µm or more in diameter are taken up), of 5% or less, in view of the controllable ranges in the step of catalyst loading.

The above-formed extrudate is dried by dielectric drying, microwave drying, hot-air drying, etc. to produce a honeycomb structure. When a large-size ceramic honeycomb filter 1 or the like is produced, a plurality of honeycomb structures produced as above may be combined using a conventional method.

Next, the honeycomb structure is plugged at the two end faces with a clay composed of about the same raw material as for the above-mentioned clay, in such a way that the predetermined cells 3 are plugged at one opening end 4 of the each predetermined cell and the remaining cells 3 are plugged at the other opening end 5 of the each remaining cell.

Next, the thus-produced honeycomb structure is loaded with a catalyst 6, for example, platinum to produce a ceramic honeycomb filter 1. The catalyst 6 may be loaded by a method ordinarily used by those skilled in the art. For example, the catalyst 6 may be loaded by wash-coating of catalyst slurry and subsequent drying and firing.

In the present embodiment, the catalyst 6 need be loaded so that, in the finally obtained ceramic honeycomb filter 1, the value obtained by dividing the cube of the porosity (%) in the partition walls 2 having the catalyst 6 (the porosity is a proportion of the volume of the total pores contained in the partition walls 2, to the total volume of the partition walls 2 including the total pores) by the mean diameter (µm) of all pores, becomes 0.8x10⁴ or less and the porosity (%) of pores of 100 µm or above in diameter in the partition walls 2 (the porosity is a proportion of the volume of the pores of 100 µm or above in diameter, to the total volume of the partition walls 2 including the total pores) becomes 5% or less. Therefore, sufficient consideration must be made to the porosity (%) of the honeycomb structure obtained and the amount of the catalyst 6 to be loaded thereon. For example, it is preferred that the honeycomb structure before loading of catalyst 6 is measured for the porosity in the partition walls, the optimum concentration and amount of catalyst slurry is determined from the measured porosity and, based on the information, the catalyst 6 is loaded on the honeycomb structure. In the above, the production process of the ceramic honeycomb filter 1 according to the present embodiment has been explained; however, the production process of the ceramic honeycomb filter according to the present invention is not restricted thereto.

### (Examples)

The present invention is described in more detail below by way of Examples. However, the present invention is not restricted to these Examples.

The ceramic honeycomb filters used in all Examples and all Comparative Examples had a cylindrical shape of 144 mm (diameter), 152 mm (length in axial direction) and 2.5 liters (volume). The ceramic honeycomb filters of Example 6 and Comparative Example 6 contained silicon carbide as the main components, and the ceramic honeycomb filters of other Examples and other Comparative Examples contained cordierite as the main components.
In production of the ceramic honeycomb filter of each Example or each Comparative Example, there were added, to 100 parts by mass of each of respective raw material powders, 4 parts by mass of a binder (hydroxypropoxyl methyl cellulose, and the like), 30.5 parts by mass of a surfactant and water, and 35 parts by mass of a pore forming agent (graphite, and the like); then, mixing and kneading were conducted to produce clay having plasticity. The clay was vacuum-deaerated and extruded using a die of predetermined shape, to obtain an extrudate of required cell density (cells/in.²).

The extrudate was dried. Using a plugging agent of about the same materials, the predetermined cells are plugged at one opening end and the remaining cells are plugged at the other opening end, followed by firing to produce honeycomb structures. There was produced catalyst slurry containing, as a main component, 180 g/ft.³ of palladium and platinum which is the catalysts and aluminum. The concentration of the slurry is adjusted to give about the same coating amount per unit surface area for the filters (110 g/l for the honeycomb structures of 300 cells/in.², 90 g/l for the honeycomb structures of 200 cells/in.², and 70 g/l for the honeycomb structures of 100 cells/in.²). The slurry was coated by vacuum aspiration, followed by drying and firing, to produce ceramic honeycomb filters of Examples 1 to 13 and Comparative Examples 1 to 6.

The ceramic honeycomb filters of the Examples and Comparative Examples were measured for porosity (%) and mean pore diameter (µm) by mercury porosimetry. From the measurements were calculated values obtained by dividing the cube of the porosity (%) in the partition walls having the catalyst (the porosity is a proportion of the volume of the total pores contained in the partition walls, to the total volume of the partition walls including the total pores) by the mean diameter (µm) of all pores. The results are shown in Tables 1 to 3.

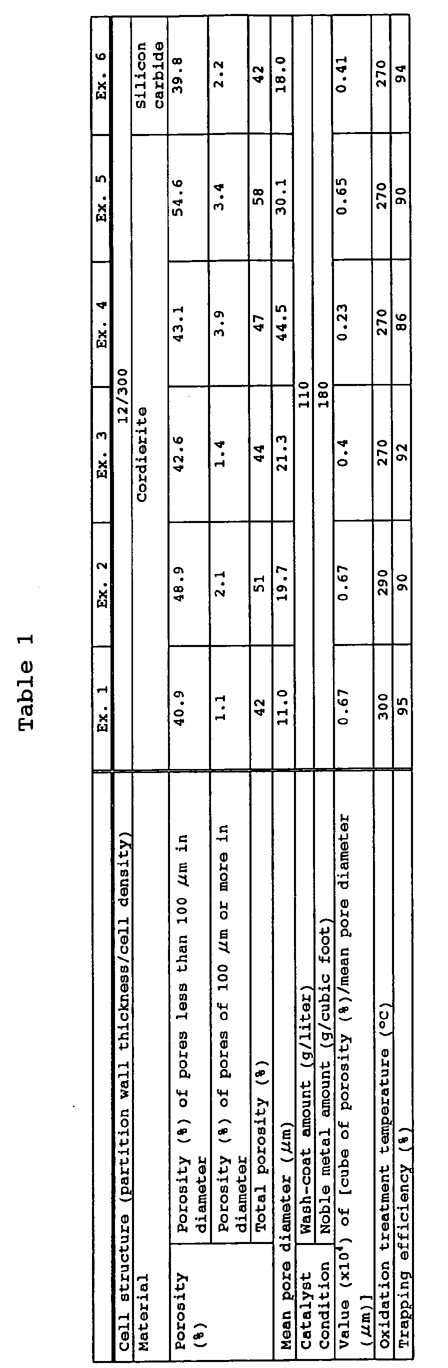

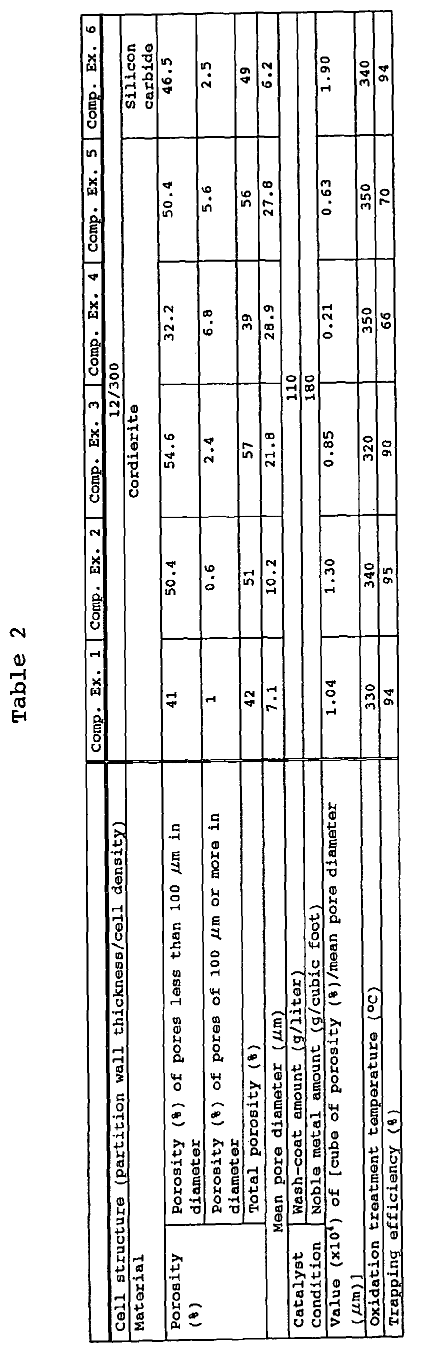

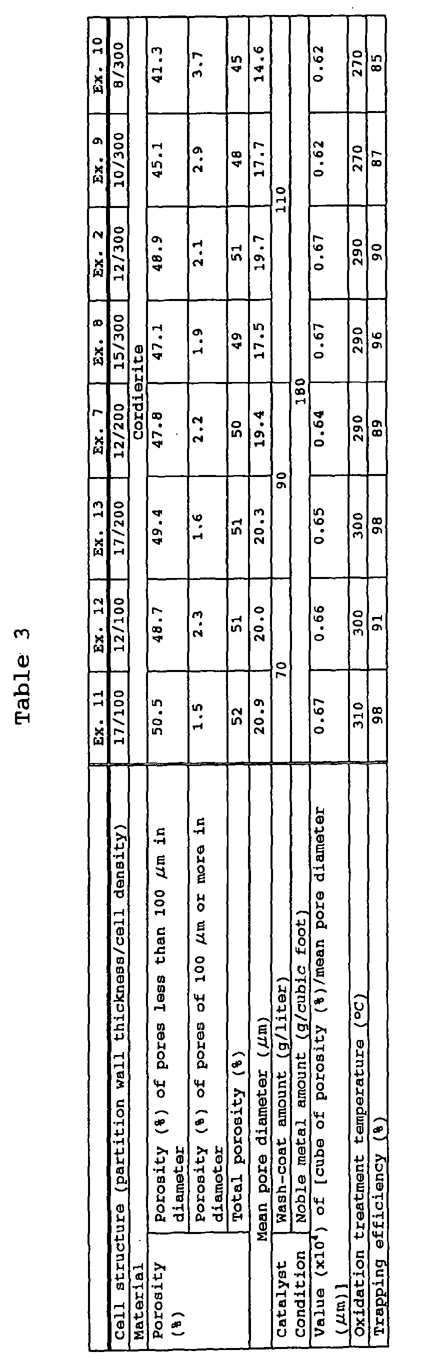

Each ceramic honeycomb filter of the Examples and Comparative Examples was tested and evaluated for oxidation treatment ability using a burner. In the test, the total of combustion gas amount and cold gas amount was set at a constant level (1.2 Nm³/min) and the NO concentration in exhaust gas was set at a constant level (300 ppm); the exhaust as temperature and the amount of particulate substance generated, at a position upstream (by 100 mm) of the inlet of ceramic honeycomb filter were changed and there was determined the lowest temperature (°C) of exhaust gas at which particulate matter was completely oxidized and there was no increase in pressure loss of ceramic honeycomb filter. The exhaust gas lowest temperature (°C) [hereinafter referred to as oxidation treatment temperature (°C)] in the above test for evaluation of oxidation treatment ability is shown in Tables 1 to 3.

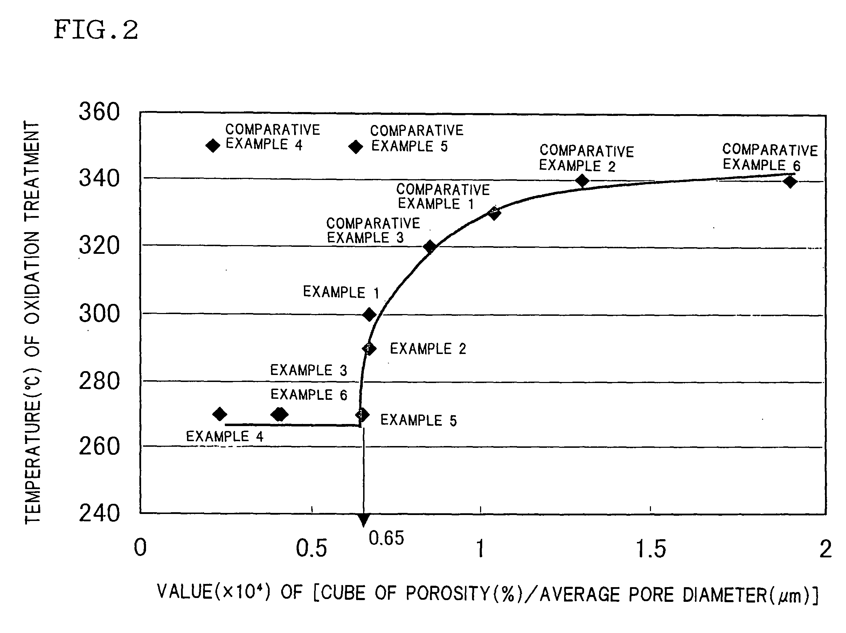

In Fig. 2 is shown a graph showing the relations between the value obtained by dividing the cube of the porosity (%) in the partition walls having the catalyst by the mean diameter (µm) of total pores (mean pore diameter) and the temperature (°C) of oxidation treatment, obtained with the ceramic honeycomb filters (shown in Tables 1 and 2) of Examples 1 to 6 and Comparative Examples 1 to 6.

As shown in Fig. 2, in the ceramic honeycomb filters of Examples 1 to 6, the oxidation treatment temperatures were low; particulate matter (e.g. soot) deposited on the partition walls was oxidation-treated at temperatures of 300 °C or lower; thereby, improvement in fuel consumption in diesel engine is possible. Further, lower oxidation treatment temperature (°C) means that, when a ceramic honeycomb filter has been used particularly as a continuous regeneration type DPF, degradation of catalyst can be suppressed and resultantly durability of filter can be increased.

Also, each ceramic honeycomb filter of the Examples and Comparative Examples was measured for trapping efficiency (%) by passing a gas containing about 2 g/hour of soot, through the filter. The results are shown in Tables 1 to 3. The ceramic honeycomb filters of Comparative Example 4 (the porosity of partition walls when only the pores of 100 µm or more in diameter were taken up, was 6.8%) and Comparative Example 5 (the porosity of partition walls when only the pores of 100 µm or more in diameter were taken up, was 5.6%) showed low trapping efficiencies of 66% (Comparative Example 4) and 70% (Comparative Example 5).

The ceramic honeycomb filters of Examples 1 to 10 wherein the partition wall thickness was 15 mil or less and the cell density was 200 cells/in.² or more, were particularly low in oxidation treatment temperature (°C) and could effectively treat particulate matter (e.g. soot) deposited on the partition walls.

### Industrial Applicability

As described above, the ceramic honeycomb filter of the present invention can treat particulate matter deposited on the partition walls at low temperatures with the action of the catalyst, and can be suitably used for treatment of exhaust gas, etc.

## Claims

1. A ceramic honeycomb filter comprising a plurality of cells functioning as a fluid passage and surrounded by ceramic porous partition walls, the predetermined cells being plugged at one opening end of the each cell, the remaining cells being plugged at the other opening end of the each cell, the partition walls having a catalyst loaded thereon,
wherein a value obtained by dividing the cube of a porosity (%) in the partition walls having the catalyst(the porosity is a proportion of a volume of total pores contained in the partition walls, to a total volume of the partition walls including the total pores) by a mean diameter (µm) of all pores, is 0.8x10⁴ or less, and a porosity (%) of pores of 100 µm or above in diameter in the partition walls(the porosity is a proportion of a volume of the pores of 100 µm or above in diameter, to the total volume of the partition walls including the total pores) is 5% or less.

2. A ceramic honeycomb filter according to Claim 1,
wherein the porosity (%) of pores of 100 µm or above in diameter in the partition walls is 4% or less.

3. A ceramic honeycomb filter according to Claim 1,
wherein the value obtained by dividing the cube of the porosity (%) in the partition walls having the catalyst by the mean diameter (µm) of all pores is 0.65x10⁴ or less and the porosity (%) of pores of 100 µm or above in diameter in the partition walls is 4% or less.

4. A ceramic honeycomb filter according to any of Claims 1 to 3, wherein a partition wall thickness is 15 mil or less and a cell density is 200 cells/in.² or more.

5. A ceramic honeycomb filter according to any of Claims 1 to 4, wherein the partition walls are composed mainly of at least one compound selected from the group consisting of cordierite, silicon carbide, silicon nitride, alumina, mullite, aluminum titanate, titania and zirconia.
